# EUROPEAN PATENT SPECIFICATION

(11) **EP 1 474 222 B1**
(45) Date of publication and mention of the grant of the patent: **13.04.2011**
(21) Application number: 03739399.8
(22) Date of filing: 12.02.2003
(51) Int. Cl.: B01D 71/32, B01D 67/00

(54) **HALAR MEMBRANES**
HALAR-MEMBRANE
MEMBRANES HALAR

(30) Priority: 12.02.2002 AU PS046602
(43) Date of publication of application: 10.11.2004
(73) Proprietor: Siemens Water Technologies Corp., Warrendale, PA 15086 (US)
(72) Inventor: MULLETTE, Daniel, Toongabbie, NSW 2146 (AU); MULLER, Heinz-Joachim, Thornleigh, NSW 2120 (AU)
(74) Representative: Murray, Adrian D'Coligny
(86) International application number: PCT/AU2003/000179
(87) International publication number: WO 2003/068374

(56) References cited:
- EP-A- 1 236 503
- GB-A- 702 911
- US-A- 4 247 498
- US-A- 4 702 836
- US-A- 4 968 733
- US-A- 6 096 213
- LLOYD D R ET AL: "MICROPOROUS MEMBRANE FORMATION VIA THERMALLY INDUCED PHASE SEPARATION. ÖI. SOLID-LIQUID PHASE SEPARATION" JOURNAL OF MEMBRANE SCIENCE, ELSEVIER SCIENTIFIC PUBL.COMPANY. AMSTERDAM, NL, vol. 52, no. 3, 15 September 1990 (1990-09-15), pages 239-261, XP000164627 ISSN: 0376-7388
- PATENT ABSTRACTS OF JAPAN vol. 016, no. 501 (C-0996), 16 October 1992 (1992-10-16) -& JP 04 187224 A (MITSUBISHI RAYON CO LTD), 3 July 1992 (1992-07-03) -& DATABASE WPI Section Ch, Week 199233 Derwent Publications Ltd., London, GB; Class A18, AN 1992-273715 XP002311766 -& JP 04 187224 A (MITSUBISHI RAYON CO LTD) 3 July 1992 (1992-07-03)
- RAMASWAMY S ET AL: "Fabrication of poly (ECTFE) membranes via thermally induced phase separation" JOURNAL OF MEMBRANE SCIENCE, ELSEVIER SCIENTIFIC PUBL.COMPANY. AMSTERDAM, NL, vol. 210, no. 1, 1 December 2002 (2002-12-01), pages 175-180, XP004389669 ISSN: 0376-7388

## Description

### TECHNICAL FIELD

The invention relates to a method of preparing Halar (ethylene chlorotrifluoroethylene copolymer, or poly (ethylene chlorotrifluoroethylene)) membrane in the form of hollow fibres for use in ultrafiltration and microfiltration.

### BACKGROUND ART

The following discussion is not to be construed as an admission with regard to the common general knowledge in Australia.

Synthetic polymeric membranes are well known in the field of ultrafiltration and microfiltration for a variety of applications including desalination, gas separation, filtration and dialysis. The properties of the membranes vary depending on the morphology of the membrane i.e. properties such as symmetry, pore shape, pore size and the chemical nature of the polymeric material used to form the membrane.

Different membranes can be used for specific separation processes, including microfiltration, ultrafiltration and reverse osmosis. Microfiltration and ultrafiltration are pressure driven processes and are distinguished by the size of the particle or molecule that the membrane is capable of retaining or passing. Microfiltration can remove very fine colloidal particles in the micrometer and submicrometer range. As a general rule, microfiltration can filter particles down to 0.05µm, whereas ultrafiltration can retain particles as small as 0.01 µm and smaller. Reverse Osmosis operates on an even smaller scale.

Microporous phase inversion membranes are particularly well suited to the application of removal of viruses and bacteria.

A large surface area is needed when a large filtrate flow is required. A commonly used technique to minimize the size of the apparatus used is to form a membrane in the shape of a hollow porous fibre. A large number of these hollow fibres (up to several thousand) are bundled together and housed in modules. The fibres act in parallel to filter a solution for purification, generally water, which flows in contact with the outer surface of all the fibres in the module. By applying pressure, the water is forced into the central channel, or lumen, of each of the fibres while the microcontaminants remain trapped outside the fibres. The filtered water collects inside the fibres and is drawn off through the ends.

The fibre module configuration is a highly desirable one as it enables the modules to achieve a very high surface area per unit volume.

In addition to the arrangement of fibres in a module, it is also necessary for the polymeric fibres themselves to possess the appropriate microstructure to allow microfiltration to occur.

Desirably, the microstructure of ultrafiltration and microfiltration membranes is asymmetric, that is, the pore size gradient across the membrane is not homogeneous, but rather varies in relation to the cross-sectional distance within the membrane. Hollow fibre membranes are preferably asymmetric membranes possessing tightly bunched small pores on one or both outer surfaces and larger more open pores towards the inside edge of the membrane wall.

This microstructure has been found to be advantageous as it provides a good balance between mechanical strength and filtration efficiency.

As well as the microstructure, the chemical properties of the membrane are also important. The hydrophilic or hydrophobic nature of a membrane is one such important property.

Hydrophobic surfaces are defined as "water hating" and hydrophilic surfaces as "water loving". Many of the polymers used to cast porous membranes are hydrophobic polymers. Water can be forced through a hydrophobic membrane by use of sufficient pressure, but the pressure needed is very high (15-300 psi, 1.03MPa), and a membrane may be damaged at such pressures and generally does not become wetted evenly.

Hydrophobic microporous membranes are typically characterised by their excellent chemical resistance, biocompatibility, low swelling and good separation performance. Thus, when used in water filtration applications, hydrophobic membranes need to be hydrophilised or "wet out" to allow water permeation. Some hydrophilic materials are not suitable for microfiltration and ultrafiltration membranes that require mechanical strength and thermal stability since water molecules can play the role of plasticizers.

Currently, poly(tetrafluoroethylene) (PTFE), polyethylene (PE), polypropylene (PP) and poly(vinylidene fluoride) (PVDF) are the most popular and available hydrophobic membrane materials. PVDF exhibits a number of desirable characteristics for membrane applications, including thermal resistance, reasonable chemical resistance (to a range of corrosive chemicals, including sodium hypochlorite), and weather (UV) resistance.

While PVDF has to date proven to be the most desirable material from a range of materials suitable for microporous membranes, the search continues for membrane materials which will provide better chemical stability and performance while retaining the desired physical properties required to allow the membranes to be formed and worked in an appropriate manner.

In particular, a membrane is required which has a superior resistance (compared to PVDF) to more aggressive chemical species, in particular, oxidising agents and to conditions of high pH i.e. resistance to caustic solutions. In particular with water filtration membranes, chlorine resistance is highly desirable. Chlorine is used to kill bacteria and is invariably present in town water supplies. Even at low concentrations, a high throughput of chlorinated water can expose membranes to large amounts of chlorine over the working life of a membrane and can lead to yellowing or brittleness which are signs of degradation of the membrane.

Microporous synthetic membranes are particularly suitable for use in hollow fibres and are produced by phase inversion. In this process, at least one polymer is dissolved in an appropriate solvent and a suitable viscosity of the solution is achieved. The polymer solution can be cast as a film or hollow fibre, and then immersed in precipitation bath such as water. This causes separation of the homogeneous polymer solution into a solid polymer and liquid solvent phase. The precipitated polymer forms a porous structure containing a network of uniform pores. Production parameters that affect the membrane structure and properties include the polymer concentration, the precipitation media and temperature and the amount of solvent and non-solvent in the polymer solution. These factors can be varied to produce microporous membranes with a large range of pore sizes (from less than 0.1 to 20µm), and possess a variety of chemical, thermal and mechanical properties.

Hollow fibre ultrafiltration and microfiltration membranes are generally produced by either diffusion induced phase separation (the DIPS process) or by thermally induced phase separation (the TIPS process).

Determining the appropriate conditions for carrying out the TIPS process is not simply a matter of substituting one polymer for another. In this regard, casting a polymeric hollow fibre membrane via the TIPS process is very different to casting or extruding a bulk item from the same material. The TIPS procedure is highly sensitive, each polymer requiring careful selection of a co-solvent, a non-solvent, a lumen forming solvent or non-solvent, a coating solvent or non-solvent and a quench, as well as the appropriate production parameters, in order to produce porous articles with the desired chemically induced microstructure in addition to the overall extruded high fibre structure.

The TIPS process is described in more detail in PCT AU94/00198 (WO 91/17204) AU 653528.

The quickest procedure for forming a microporous system is thermal precipitation of a two component mixture, in which the solution is formed by dissolving a thermoplastic polymer in a solvent which will dissolve the polymer at an elevated temperature but will not do so at lower temperatures. Such a solvent is often called a latent solvent for the polymer. The solution is cooled and, at a specific temperature which depends upon the rate of cooling, phase separation occurs and the polymer rich phase separates from the solvent.

All practical thermal precipitation methods follow this general process which is reviewed by Smolders et al in Kolloid Z.u.Z Polymer, 43, 14-20 (1971). The article distinguishes between spinodal and binodal decomposition of a polymer solution.

The equilibrium condition for liquid-liquid phase separation is defined by the binodal curve for the polymer/solvent system. For binodal decomposition to occur, the solution of a polymer in a solvent is cooled at an extremely slow rate until a temperature is reached below which phase separation occurs and the polymer rich phase separates from the solvent.

It is more usual for the phases not to be pure solvent and pure polymer since there is still some solubility of the polymer in the solvent and solvent in the polymer, there is a polymer rich phase and a polymer poor phase. For the purposes of this discussion, the polymer rich phase will be referred to as the polymer phase and the polymer poor phase will be referred to as the solvent phase.

When the rate of cooling is comparatively fast, the temperature at which the phase separation occurs is generally lower than in the binodal case and the resulting phase separation is called spinodal decomposition.

According to the process disclosed in U.S. Specification No. 4,247,498, the relative polymer and solvent concentrations are such that phase separation results in fine droplets of solvent forming in a continuous polymer phase. These fine droplets form the cells of the membrane. As cooling continues, the polymer freezes around the solvent droplets.

As the temperature is lowered, these solubilities decrease and more and more solvent droplets appear in the polymer matrix. Syneresis of the solvent from the polymer results in shrinkage and cracking, thus forming interconnections or pores between the cells. Further cooling sets the polymer. Finally, the solvent is removed from the structure.

Known thermal precipitation methods of porous membrane formation depend on the polymer rich phase separating from the solvent followed by cooling so that the solidified polymer can then be separated from the solvent. Whether the solvent is liquid or solid when it is removed from the polymer depends on the temperature at which the operation is conducted and the melting temperature of the solvent.

True solutions require that there be a solvent and a solute. The solvent constitutes a continuous phase and the solute is uniformly distributed in the solvent with no solute-solute interaction. Such a situation is almost unknown with the polymer solutions. Long polymer chains tend to form temporary interactions or bonds with other polymer chains with which they come into contact. Polymer solutions are thus rarely true solutions but lie somewhere between true solutions and mixtures.

In many cases it is also difficult to state which is the solvent and which is the solute. In the art, it is accepted practice to call a mixture of polymer and solvent a solution if it is optically clear without obvious inclusions of either phase in the other. By optically clear, the skilled artisan will understand that polymer solutions can have some well known light scattering due to the existence of large polymer chains. Phase separation is then taken to be that point, known as the cloud point, where there is an optically detectable separation. It is also accepted practice to refer to the polymer as the solute and the material with which it is mixed to form the homogeneous solution as the solvent.

In the present case the inventors have sought to find a way to prepare Halar membranes without the use of highly toxic solvents, and in particular, to prepare asymmetric hollow fibre Halar membranes. Halar, or poly (ethylene chlorotrifluoroethylene), is a 1:1 alternating copolymer of ethylene and chlorotrifluoroethylene, and having the following structure:

-(CH₂-CH₂-CFC1-CF₂-)ₙ-

It has been known for some time to produce flat sheet Halar membranes, and the processes are disclosed in US 4702836, for example. The previous methods were not amenable to producing hollow fibres and moreover, utilised solvents which are highly toxic with high environmental impact, such as 1,3,5-trichlorobenzene, dibutyl phthalate and dioctyl phthalate.

The properties of Halar make it highly desirable in the field of ultrafiltration and microfiltration. In particular, Halar has extremely good properties in relation to its resistance both to chlorine and to caustic solutions, but also to ozone and other strong oxidising agents. While these desiderata have been established for some time, it was hitherto unknown how to fulfil the long felt need to make asymmetric hollow fibre membranes from such a desirable compound. Further, a disadvantage in relation to the existing prepararatory methods for Halar flat sheet membranes is that they require the use of highly toxic solvents or solvents that are of dubious safety at the very least. For instance, the conventional state of the art is that the solvents needed are aromatic solvents such as dibutyl phthalate (DBP), dioctyl phthalate (DOP) and 1,3,5-trichlorobenzene (TCB). Such difficult solvents are required due to the chemical stability of Halar and its resistance to most common solvents below 150°C.

It is an object of the present invention to overcome or ameliorate at least one of the disadvantages of the prior art, or to provide a useful alternative, particularly in terms of methods of production.

### SUMMARY OF THE INVENTION.

The invention provides a method of making an asymmetric hollow fibre porous polymeric ultrafiltration or microfiltration material as defined in claim 1.

The Halar ultrafiltration or microfiltration has an asymmetric cross section, a large-pore face and a small-pore face.

Preferably, the porous polymeric Halar membrane pore sizes in the renge 0.01µm to µm. Pore size can be determined by the so called bubble point method.

The porous polymeric ultrafiltration or microfiltration membranes may be either hydrophobic or hydrophilic, and may include other polymeric materials compatible with Halar. Additional species adapted to modify the chemical behaviour of the membrane may also be added. In one highly preferred alternative, the porous polymeric membrane further includes a modifying agent to modify the hydrophilicity / hydrophobicity balance of the membrane. This can result in a porous polymeric membrane which is hydrophilic or alternatively, a porous polymeric membrane which is hydrophobic.
Perferably, in the method of the invention a leachable agent is incorporated in the Halar.

In one preferred embodiment, the leachable agent is silica.

5 Preferably, the silica is present in an amount of from 10 to 50wt% of the final polymer, and more preferably around 30%. The silica may be hydrophobic silica or hydrophilic silica. Highly preferred are fumed silica's such as the hydrophilic Aerosil 200 and the hydrophobic Aerosil R972

Preferably, the porous polymeric ultrafiltration or microfiltration membranes have one or more of the following properties: high permeability (for example, greater than 1000LMH/hr@100KPa), good macroscopic integrity, uniform wall thickness and high mechanical strength (for example, the breakforce extension is greater than 1.3N).

Preferably, the Halar is present in the mixture in an amount ranging from 14-25%, and most preferably around 16-23%. Preferably, the lumen forming fluid is digol. In highly preferred embodiments, the process is conducted at elevated temperatures, preferably above 200°C, and more preferably above 220°C.

Preferably, the coating fluid is selected from one or more of GTA, citroflex-2 and digol.

Preferably a leachable pore forming agent is used more preferably silica. The method may further include the step of leaching said leachable pore forming agent from said membrane. Preferably, the pore forming agent is a leachable silica, which is leached from the dope by caustic solution,

In certain preferred embodiments, the digol is used as a non-solvent and independently water is used as a quench fluid.

Preferably, the leachable pore forming agent is an inorganic solid with an average particle size less than 1 micron, and most preferably is leachable silica. In highly preferred embodiments, the silica is present in around 3-9%

Preferably, the leachant is a caustic solution.

### BRIEF DESCRIPTION OF THE DRAWING

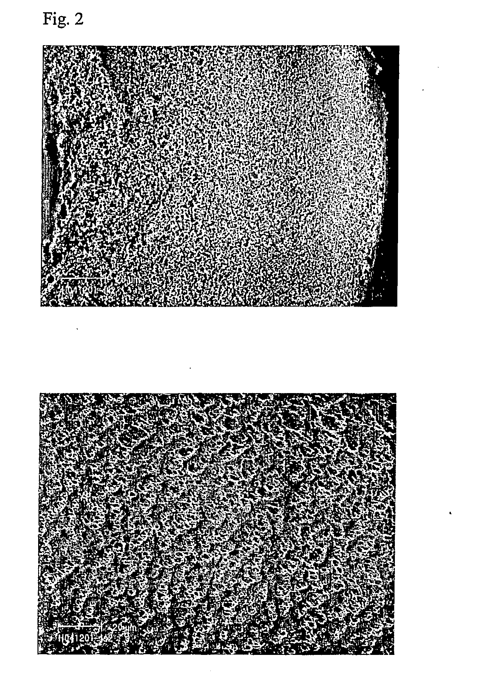

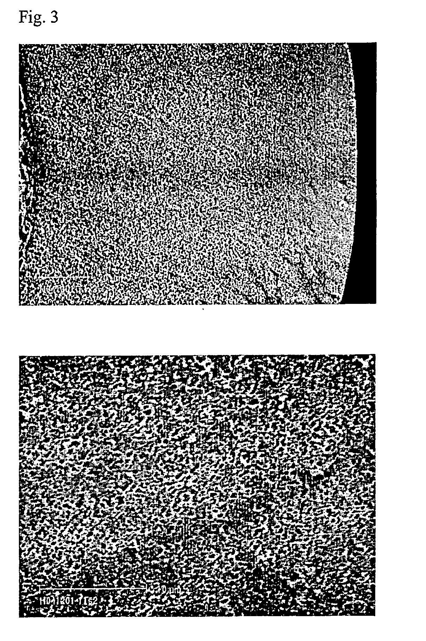

Fig la and 16 are diagrams of alternative TIPS processes used to prepare HF membranes
Figs 2 and 3 are Scanning Electron Micrographs of the membranes of the present invention.

### BEST METHOD OF PERFORMING THE INVENTION

The TIPS process is described in more detail in PCT AU94/00198 (WO 91/17204).

The poly (ethylene chlorotrifluoroethylene) is dissolved in a suitable solvent and then passed through an annular co-extrusion head.

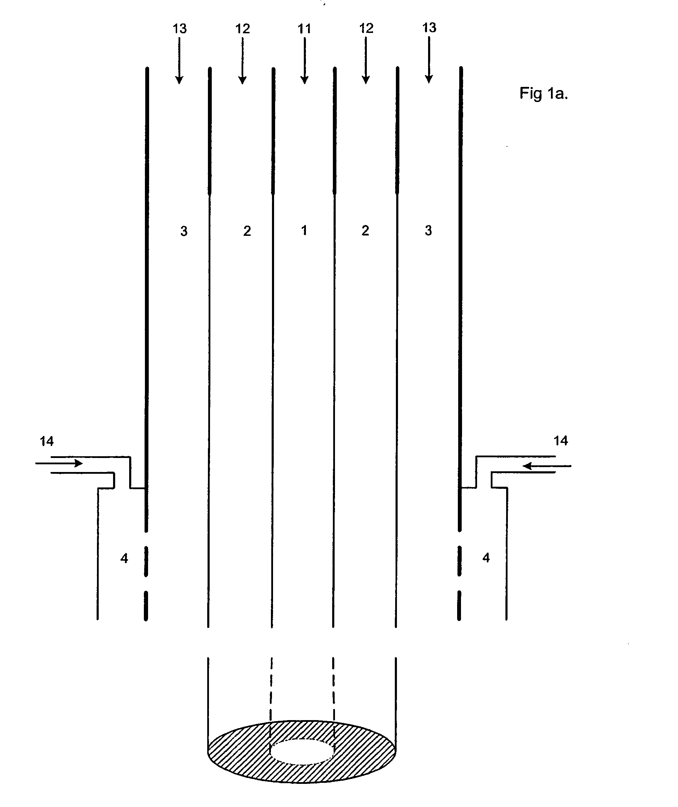

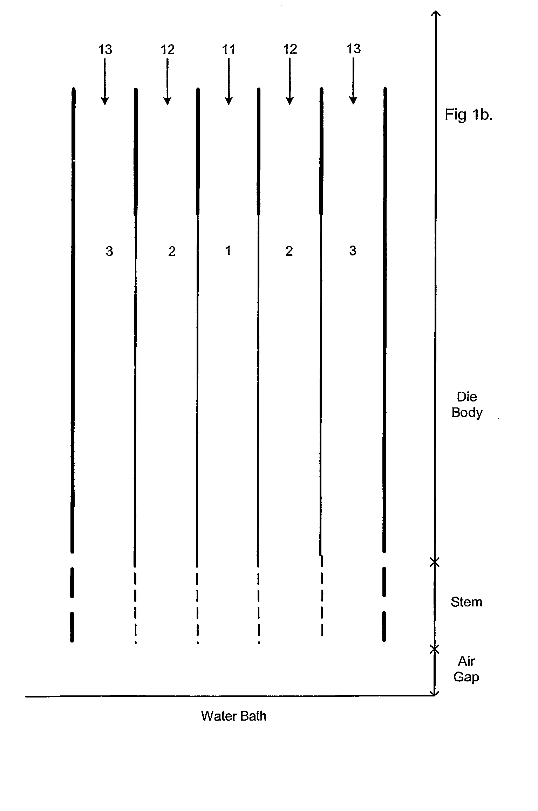

There are two possible ways to conduct the methods of the present invention in relation to hollow fibres. One is via a co extrusion head having three concentric passageways, as shown in cross section figure 1b, the other is via a quadruple co-extrusion head having four concentric passageways as shown in cross section in Figure 1a. The principle is broadly the same in both cases, except for the way the quench fluid is contacted with the fibre.

In both cases, the axial passageway 1 may contain a lumen forming fluid 11. The first outwardly concentric passageway 2 contains a homogenous mixture of the polymer and solvent system 12 to form the membrane, the next outwardly concentric passageway 3 has a coating fluid 13. In the case of the triple extrusion head, the quench is a bath either directly adjacent the extrusion head or slightly spaced below it with an intermediate air gap. In the quadruple extrusion head, the outermost passageway 4 applies a quench fluid 14 to the fibre.

Under carefully thermally controlled conditions, the lumen forming fluid, the membrane forking solution and the coating fluid are contacted with a quench fluid at a predetermined temperature (and flow rate, if the quench is applied by means of an outermost concentric passageway). The poly (ethylene chlorotrifluoroethylene) solution comes into contact with the lumen forming fluid on the inside of the hollow fibre and with the coating fluid and/or quench bath solution on the outside of the hollow fibre.

The lumen and coating fluids contain one or more components of the solvent system, alone or in combination with other solvents, in selected proportions (the first component may be absent). The composition of the coating and lumen fluids predetermines the pore size and frequency of pores on the membrane surfaces.

Each fluid is transported to the extrusion head by means of individual metering pumps. The three components are individually heated and are transported along thermally insulated and heat traced pipes. The extrusion head has a number of temperature zones. The lumen fluid, membrane forming solution (dope) and coating fluid are brought to substantially the same temperature in a closely monitored temperature zone where the dope is shaped. As mentioned above, the exact nature of the quench depends on whether the quadruple or triple extrusion head is used. In the quadruple, the quench fluid is introduced via an outer concentric passageway. The fibre may travel down the quench tube at a significantly different linear speed from the quench fluid. The fibre may then pass into a further quantity of quenching fluid if desired.

In the triple extruder system, the fibre passes out of the die, which may be optionally in the shape of a stem to assist in determining fibre structure. The fibre may pass through an optional air gap before passing into a quench bath. Most fibres disclosed herein were prepared by the triple extrusion head, as will be clear by the inclusion of an air gap distance in the production parameters.

When the quench fluid is contacted with the dope, the dope undergoes non-equilibrium liquid-liquid phase separation to form a bicontinuous matrix of large interfacial area of two liquids in which the polymer rich phase is solidified before aggregated separation into distinct phases of small interfacial area can take place.

Preferably, any air, gas or vapour (not being a gas or vapour that serves as the lumen fluid), is excluded during extrusion and the fibre is stressed axially to stretch it by a factor ranging from 1.5 to 5, thereby elongating the surface pores.

The hollow fibre membrane leaves the extrusion head completely formed and there is no need for any further formation treatment except for removing the solvent system from the membrane in a post-extrusion operation that is common to membrane manufacturing process. In a preferred method, an appropriate solvent that does not dissolve the polymer but is miscible with the dope solvents is used to remove the solvent system for the polymer from the finished membrane.

The lumen forming fluid may be selected from a wide variety of substances such as are disclosed herein. The same substance may be used as the coating and quenching liquids. Water or virtually any other liquid may be used as the quench liquid. Water is used if a highly asymmetric structure is desired.

Asymmetric membranes can on rare occasions result from the TIPS process. The rate and speed of de-mixing occurs faster at the outer surface of the membrane and slower further away from the interface. This results in a pore size gradient with smaller pores at the surface and larger pores further inwards. The pores at the interface which in a hollow fibre are the outer layer of the fibre and the wall of the lumen may, in some circumstances, be so small that a "skin" region occurs. This is about one micron thick and is the critical region for filtration. Thus, the outside of the fibre is small pored whereas the centre of the polymeric region has large pore size.

The initial poly (ethylene chlorotrifluoroethylene) membrane trials were conducted by extrusion from small scale apparatus into a water quench, using either glycerol triacetate (GTA) or Citroflex 2 as the solvent. The structure of the membranes as observed by SEM appeared to be excellent, although there was some degree of skinning. The membrane prepared from Citroflex appeared the most promising and had a relatively open skin with a number of larger holes.

A poly (ethylene chlorotrifluoroethylene) membrane was prepared by extrusion in the manner described above for the TIPS process. The poly (ethylene chlorotrifluoroethylene) membranes were initially prepared without the use of a coating fluid, using GTA (table 1) or citroflex2 (table 2) as solvent.

**TABLE 1. UNCOATED POLY (ETHYLENE CHLOROTRIFLUOROETHYLENE) MEMBRANE - GTA SOLVENT**

| Parameter | Value |
|---|---|
| Solvent | 100% Glycerine Triacetate (GTA) |
| Lumen | 100% Digol |
| poly (ethylene chlorotrifluoroethylene) Concentration | 24% |
| Barrel Temperature | 230°C |
| Solvent injectors | 230°C |
| Throughput | 100cc/min |
| Screw speed | 250rpm |
| Die Temperature | 212°C |

The dope was completely clear and homogeneous, indicating complete solubility of the Halar in the GTA at 230°C. The dope solidified under ambient conditions after approx. 5 seconds. The fibre was extruded through a die at a temperature of 212°C into a water quench. The air gap was approximately 15mm and the lumen forming liquid was diethylene glycol (digol).

Selecting a die temperature which is too low can lead to pulsing of the fibre and blockages in the die. Halar melts at 240°C and dissolves in GTA between 210°C and 220°C with a cloud point around 215°C. The solvent was varied to Citroflex 2 as per table 2

**TABLE 2 UNCOATED POLY (ETHYLENE CHLOROTRIFLUOROETHYLENE) MEMBRANE - CITROFLEX2 SOLVENT**

| Parameter | Value |
|---|---|
| Solvent | 100% Citroflex 2 |
| Lumen | 100% Digol |
| poly (ethylene chlorotrifluoroethylene) Concentration | 24% |
| Barrel Temperature | 230°C |
| Solvent injectors | 230°C |
| Throughput | 100cc/min |
| Screw speed | 250rpm |
| Die Temperature | 212°C |

The dope was completely clear and homogeneous as with the GTA mixture, indicating complete solubility of the polymer in Citroflex 2 at 230°C. The dope had a consistency slightly better than that of the GTA dope and also solidified under ambient conditions after approx. 5 seconds.

When Citroflex 2 was used as the solvent, it was necessary to add extra heat to the die to raise the temperature to sufficient levels to prevent blockages. The fibre was eventually extruded through a die at a temperature of approx. 212°C into a water quench. The air gap was approximately 15mm and the lumen liquid was diethylene glycol (digol).

The SEMs showed the structure of the surface and of the cross-section of both hollow fibre poly (ethylene chlorotrifluoroethylene) membranes prepared using GTA and Citroflex 2 to have adequate pore formation and structure. The fibres were also surprisingly strong and ductile, with a large degree of flexibility.

The procedure was further modified by the use of a coating on the outside of the fibre. The use of coating compositions in the preparation of the Halar membranes was found to enhance the permeability (2200LMH) and improve the bubble point (490kPa) of the resultant membranes. The process parameters are shown below in table 3.

**TABLE 3 COATED POLY (ETHYLENE CHLOROTRIFLUOROETHYLENE) MEMBRANE VARIOUS SOLVENTS**

| Parameter | Value | | |
|---|---|---|---|
| Solvent | GTA | | |
| Coating | GTA | Citroflex 2 | Digol |
| Lumen | 100% Digol | | |
| Polymer Concentration | 21 % | | |
| Barrel Temperature | 230°C | | |
| Solvent injectors | 230°C | | |
| Throughput | 100cc/min | | |
| Screw speed | 250rpm | | |
| Die Temperature | 200°C | | |

As previously, the dope was clear and homogeneous, was of a good consistency and solidified under ambient conditions after approx. 5 seconds. The fibre was extruded through a die at a temperature of approximately 200°C into a water quench. The air gap was approximately 15mm and the lumen liquid was diethylene glycol (digol).

It was necessary to ensure that the die temperature and a regular coating flow were maintained. Irregular flow was minimised or eliminated by degassing the coating and lumen vessels prior to use. Heated lines were installed for the coating and lumen fluids to help maintain die temperature. Extra insulation was also used, as maintaining an adequate temperature is required in order to produce a hollow poly (ethylene chlorotrifluoroethylene) fibre of consistent quality.

Two different trials were performed: GTA coating and Citroflex 2 coating. An uncoated sample was produced for comparison.

**TABLE 4 COATED POLY (ETHYLENE CHLOROTRIFLUORO ETHYLENE) HOLLOW FIBRE MEMBRANE PERFORMANCE**

| Parameter | No Coating | GTA Coating | Citroflex 2 Coating |
|---|---|---|---|
| % poly (ethylene | 21 | 21 | 21 |
| chlorotrifluoroethylene) | | | |
| Coating Flow (cc/min) | 0 | 10 | 10 |
| Lumen Flow (cc/min) | 5 | 5 | |
| Permeability (LMH @100kPa) | - | 2294 | - |
| Bubble Point (kPa) | - | 490 | - |
| Break Extension (%) | - | 92.9 | - |
| Break Force (N) | - | 1.35 | - |
| Force/unit area (MPa) | - | 4.6 | - |
| Fibre OD/ID (µm) | 856/469 | 766/461 | - |

As was apparent from the SEMs of the sample, the sample with no coating had an impermeable skin, hence the absence of a result for permeability. The skin also has the effect of increasing break extension (BE) and break force (BF) artificially therefore these test were not performed either.

The results from the GTA coated samples showed that permeability was high, as was break extension and force. In some cases, the photograph of the cross section of the GTA coated sample showed some small "holes", probably caused by bubbles in the dope.

The high bubble point for the GTA sample indicates that many smaller pores rather than a smaller number of larger pores provide the high flow. The Citroflex 2 coated membrane can be seen in the SEM's to have a good pore structure.

In order to produce membranes with a controlled density surface skin and having a more hydrophilic nature, silica was added to the dope with the intention of subsequently leaching the silica out of the formed membrane matrix by the use of a caustic solution.

A hydrophilic silica, Aerosil R972 was tested as an additive to the poly (ethylene chlorotrifluoroethylene) membrane mixture. The dope was cast into a hollow fibre membrane, and the resultant hollow fibre membranes were quenched in water.

Once the membranes had been cast, a portion thereof was leached in a 5% aqueous caustic solution at room temperature for 14 hours.

After the membranes were cast, and prior to leaching, the membranes were examined using scanning electron microscopy. The structures were generally extremely promising with the surface of the sheets completely open and totally free of any skin.

The addition of the silica produced a hydrophilic membrane with a highly porous structure.

Subsequently placing the sample in caustic soda to leach the silica provided a dramatic opening up in the membrane structure even further. The result of the leaching was a change in the cross-section from a conglomerate-like structure to the more traditional lace or sponge-like formation. The leaching with caustic soda provided a membrane of good open structure.

The optimal dope for forming a TIPS poly (ethylene chlorotrifluoroethylene) polymer appears to be require the incorporation of 10-50wt% silica relative to the polymer.

A number of hollow fibre membranes were prepared from the above dope. The wetting characteristics were as desired and the membrane structure showed an extremely open surface. While 3-6% silica was used in the present invention, it will be appreciated that the quantity can vary significantly without departing from the present inventive concept.

Leaching the silica from the membranes had increased effect on the permeability and pore size of the hollow fibres without altering the desirable physical properties of the membrane.

A long leaching time is not necessarily required and can be incorporated in the production process as a post-treatment of the final modular product. The leaching process can be carried out at any time, however there is an advantage to postponing the leaching process as long as possible, since any damage to the surface of the fibres during handling can be overcome by leaching which physically increases the porosity of the membrane.

SEM analysis of the membranes showed a high degree of asymmetry. Asymmetry is defined as a gradual increase in pore size throughout the membrane cross-section, such that the pores at one surface of the hollow fibre are larger than the other. In this case, the pore size increase was seen from the outer surface where the pores were smallest (and a quite dense surface layer was present) to the inner surface where the pores were significantly larger than those on the outer surface.

As well as silica, the leaching process allows for the introduction of other functionalities into the membrane, such as introducing hydrolysable esters to produce groups for anchoring functional species to membranes.

The leaching process has the capacity to maintain the hydrophilic character of a membrane after leaching. Again, without wishing to be bound by theory, the silica particles have a size in the order of nanometres so consequently the silica disperses homogeneously throughout the polymer solution. When the polymer is precipitated in the spinning process, there is a degree of encapsulation of the SiO2 particles within the polymer matrix. Some of the particles (or the conglomerates formed by several silica particles) are wholly encapsulated by the precipitating polymer, some are completely free of any adhesion to the polymer (i.e. they lie in the pores of the polymer matrix) and some of the particles are partially encapsulated by the polymer so that a proportion of the particle is exposed to the 'pore' or to fluid transfer.

When contacted with caustic, it is believed that these particles will be destroyed from the accessible side, leaving that part of the particle in touch with the polymer matrix remaining. The remainder of the silica particle adheres to the polymer matrix by hydrophobic interaction and/or mechanical anchoring. The inside of the particle wall is hydrophilic because it consists of OH groups attached to silica. Because the silica is connected to hydrophobic groups on the other side, it cannot be further dissolved.

Thus when the membranes are treated with caustic solution, the free unencapsulated SiO₂ reacts to form soluble sodium silicates, while the semi-exposed particles undergo a partial reaction to form a water-loving surface (bearing in mind that given the opportunity, such particles would have dissolved fully). It is believed that the pores in the polymer matrix formed during the phase inversion stage yet filled with SiO particles are cleaned out during leaching, giving a very open, hydrophilic membrane.

Poly (ethylene chlorotrifluoroethylene) Membranes incorporating 3% Aerosil R972 (fumed silica) into the membrane were prepared by the TIPS process. The process parameters are given in Table 5. The poly (ethylene chlorotrifluoroethylene) fibre sample was then placed in an aqueous solution of 5wt% caustic to leach the silica from the membrane. The best result in terms of permeability was the Citroflex coated sample (11294LMH) but had a low bubble point (110kPa). The best result in terms of bubble point was the GTA coated sample (150kPa).

**TABLE 5 COATED MEMBRANES WITH SILICA**

| | | | | |
|---|---|---|---|---|
| Parameter | Value | | | |
| Solvent | GTA | | | |
| Coating | None | GTA | Digol, | Citroflex 2 |
| Lumen | 100% Digol | | | |
| Polymer Concentration | 21 % | | | |
| Additives | 3% (of dope) Aerosil R972 delivered as a slurry in GTA | | | |
| Barrel Temperature | 230°C | | | |
| Solvent injectors | 230°C | | | |
| Throughput | 100cc/min | | | |
| Screw speed | 1250rpm | | | |
| Die Temperature | 200°C | | | |

The dope was similar to that produced in the earlier trials. The most obvious difference was in opacity - with the silica included the dope was a cloudy white colour.

The fibre was extruded through a die at a temperature of approx. 200°C into a water quench. The air gap was approximately 15mm and the lumen liquid was diethylene glycol (digol).

Several different samples were taken. Some had no coating, others had GTA, Digol and Citroflex 2 coatings applied at two different production rates (30 and 60m/min). The production parameters are shown in table 6

**TABLE 6 COATED MEMBRANES WITH SILICA**

| Parameter | No Coating | GTA | Digol | Citroflex 2 |
|---|---|---|---|---|
| % Polymer | 21 | 21 | 21 | 21 |
| % Aerosil R972 | 3 | 3 | 3 | 3 |
| Coating Flow (cc/min) | 0 | 10 | 10 | 10 |
| Lumen Flow (cc/min) | 5 | 5 | 5 | 5 |
| Permeability (LMH @100kPa) | 0 | 1354 | 1564 | 3296 |
| Bubble Point (kPa) | 0 | 238 | >50 | 155 |
| Break Extension (%) | - | 118 | 52.3 | 71.1 |
| Break Force (N) | - | 1.81 | 1.30 | 0.86 |
| Force/unit area (MPa) | - | 3.63 | 3.74 | 4.67 |
| Fibre OD/ID (µm) | 624/356 | 968/550 | 783/414 | 614/385 |

The SEMs show that even with silica in the membrane the use of no coating agent resulted in the formation of a surface similar to a hollow fibre cast without silica. The appearance of the surfaces of the GTA and Citroflex hollow fibre membranes are similar, but the Citroflex coating gives a more open surface. This openness is reflected in the permeability and bubble point - the fibres coated with Citroflex have a much lower bubble point and a much higher permeability than the GTA coated samples. The GTA and Citroflex coated membranes with Aerosil had a permeability close to that of the corresponding hollow fibre membrane samples prepared without added silica.

The Digol coated samples have a very rough and inconsistent surface, as shown by the poor bubble point.

The samples described herein were are all prepared at a 30m/min production rate. However, no significant difference was observed between 30, 60 and 100m/min production rates in casting any of the samples.

The samples contain silica that can be leached from the fibres by the use of caustic soda (sodium hydroxide). Thus the effect upon the flow rate and bubble point was determined by leaching an uncoated sample, a GTA coated sample and a Citroflex coated sample in 5wt% aqueous caustic solution at room temperature (23°C). The Digol sample was omitted from this process due to its poor properties. Table 7 below gives fibre results and the SEMs of the leached fibres follow.

**TABLE 7 RESULTS FORLEACHFD SMICA POLY (ETHYLENE CHLOROTRIFLUOROETHYLENE) FIBRES**

| Parameter | No Coating | GTA | Citroflex 2 |
|---|---|---|---|
| % Polymer | 21 | 21 | 21 |
| % Aerosil R972 | 3 | 3 | 3 |
| Coating Flow (cc/min) | 0 | 10 | 10 |
| Lumen Flow (occ/min) | 5 | 5 | 5 |
| Permeability (LMH @100kPa) | - | 5867 | 11294 |
| Bubblo Point(kPa) | - | 150 | 107 |
| Break Extension (%) | - | 115 | 81.0 |
| Break Force (N) | - | 1.67 | 0.98 |
| Porce/unit area (MPa) | - | 3.36 | 5.43 |
| Fibre OD/ID (µm) | 624/356 | 968/550 | 614/385 |

Post-leaching SEMs of the fibres show some very impressive structures. All of the fibre cross sections are very open and in the case of the sample without coating, some asymmetry. The uncoated sample did not generate surface pores even after 5 days of leaching in the case of 3% silica, although this may be overcome by incorporating a higher silica content in the dope mixture. The surfaces of any fibres are not dramatically altered after leaching, but there is a significant change in the porosity and bubble point of the fibres,

The Citroflex coated samples post-leaching increased in flow by nearly 350% (3296 to 11294LMH) but the bubble point of the fibres while already low dropped by 31% (154 down to 107kPa). This is consistent with the SEMs. The GTA samples have been consistent with these results; the sample with Aerosil (pre-leaching) has lost a portion of its high bubble point (490 down to 238kPa) whereas permeability is relatively unchanged with the addition of Aerosil - as would have been expected for the Citroflex sample.

Post-leaching however gave a dramatic 320% increase in the flow (1354 up to 5687LMH) but a slightly larger drop in the bubble point of 37% (238 down to 150kPa).

The mean of the break extension (BE) and break force (BF) results for the GTA and for the Citroflex coated samples were unchanged after 30-40hrs leaching in 5% NaOH at room temperature. This shows the polymer and resulting membrane resist caustic attack well.

The use of 3% silica was not sufficient to produce a hydrophilic membrane. However it nevertheless opens up the membrane structure and improve flows.

With higher silica content, up to around 6%, the flow and bubble point do not change dramatically from the results achieved with 3% Aerosil because the presence of the silica is most likely what induces the changes in the membrane structure, not these quantities. The surface of the fibre is also modified to get a better retention.

The use of post treatment agents in modifying the properties of ultrafiltration membranes is known. One such post treatment, involving soaking the Halar fibres in 50wt% aqueous glycerol solution for 24h was conducted. The results shown below in table S compare Halar fibres otherwise identical apart from the glycerol soak. Soaking was seen to dramatically increase the permeability of the membrane, from being impermeable before treatment to having a permeability of 138Lm⁻²h⁻¹ at 100Kpa.

**TABLE 8 POST SOAKING IN GLYCEROL**

| Parameter | Halar | Halar |
|---|---|---|
| | No Post Treatment | 50% Aqueous Glycerol 24h |
| Solvent | 100% GTA | 100% GTA |
| Coating | 100% GTA | 100% GTA |
| % Polymer | 21 | 21 |
| Coating Flow Rate (cc/min) | 2.5 | 2.5 |
| Lumen Flow Rate (cc/min) | 5 | 5 |
| Haul Off (m/min) | 80 | 80 |
| Permeability (Lm⁻²h⁻¹) @100kpa | No flow | 138 |
| Water Bubble Point (kPa) | >660 | >660 |
| HFE Bubble Point (kPa) | - | 200-250 |
| Break Extension (%) | 131 | 131 |
| Break Force (N) | 1.14 | 1.14 |
| Force/Unit Area (Mpa) | 6.82 | 6.82 |
| Fibre OD/ID | 539/278 | 539/278 |

The ability of membrane synthesis methods to be scaled up to production levels is important. The processes used to produce the large quantity of fibres must not only be operable on a small scale, they must also be robust enough to be capable of being scaled up for use in a more typical production format, where solvent systems, die design and other production parameters need to be re optimised.

Trials were initially conducted on a system used for the commercial preparation of PVDF membranes by a TIPS process. The main differences were the use of PEG200 as the quench fluid, rather than water.

The production parameters are as shown in the following table 9.

**TABLE 9 PRODUCTION PARAMETERS**

| | |
|---|---|
| Parameter | Value |
| Solvent | Citroflex 2 |
| Coating | Citroflex 2 |
| Lumen | 100%Digol |
| Polymer concentration | 21 % |
| Barrel Temperature | 230°C |
| Solvent injectors | 230°C |
| Throughput | 100cc/min |
| Screw speed | 250rpm |
| Die Temperature | 230°C |

As with the earlier trials, the extruder product was completely optically clear and homogeneous. The fibre was spun through a conventional TIPS die configurations at a temperature of 230°C, with a long (150mm) stem in which Citroflex 2 coated the fibre. Finally the fibre emerged into a glass tube with PEG200 as the quenching media. There was no air gap and the lumen liquid was diethylene glycol (digol).

The Trial produced fibres having the properties as shown in table 10.

**TABLE 10 - CITROFLEX 2 COATED FIBRES**

| **Parameter** | **Citroflex 2 Coating** |
|---|---|
| % Polymer | 21 |
| Coating Flow (cc/min) | 10 |
| Lumen Flow (cc/min) | 5 |
| Permeability (LMH @100kPa) | 2596 |
| Bubble Point (kPa) | 400 |
| Break Extension (%) | 145.8 |
| Break Force (N) | 1.3 |
| Force/unit area (MPa) | 8.38 |
| Fibre OD/ID (µm) | 626/439 |

The SEMs show a fibre with a morphology exhibiting a uniform cross section with a slight degree of asymmetry. Also apparent is a very coarse pore structure on the surface, with skinned areas in between. These skinned areas probably account for some of the high break extension (BE).

This trial demonstrates that different quench liquids can be used to produce a membrane with an acceptable structure. This is facilitated by the fact that the Halar dope is very close to the cloud point, enabling the use of most types of non-solvent suitable to the process as a quench fluid giving slightly different structures. However as explained below, given the good structure with water - the cheapest non-solvent possible - it does not appear necessary to use another quench type.

A second trial was conducted with a similar dope using a triple head extruder as shown in figure 1b. It is particularly preferred if the die is of a stem configuration. In figure 1b, 13 is the coating fluid, 12 is the polymer solution (dope) and 11 is the lumen fluid. The stem can be of any length, but particularly is between 0.5 and 150mm so that the coating covered the surface of the spun fibre evenly. The air gap, the distance between the die tip and the quench, can be any length but is most advantageously between 0 and 10mm. The production parameters are shown in the attached table.

**TABLE 11 PRODUCTION PARAMETERS**

| **Parameter** | **Value** |
|---|---|
| Solvent | GTA, Citroflex 2 |
| Coating | GTA, Citroflex 2 |
| Lumen | 100% Digol |
| Polymer Concentration | 21% |
| Barrel Temperature | 230°C |
| Solvent injectors | 230°C |
| Throughput | 100cc/min |
| Screw speed | 250rpm |
| Die Temperature | 230°C |

A plate was selected in preference to a long stem, the aim being to reduce the contact time between the coating fluid and the spun fibre. This was changed from 150mm down to ~5mm of plate plus a very small air gap (~5mm) so that the coating contact time is a small as possible. Following this the fibre entered directly into a water quench. Both the temperature of the coating fluid and the total contact time have a significant effect upon the structure of the fibre surface.

The SEMs showed the fibres to exhibit a difference in the surface structure compared to the initial production trial. The temperature of the die and coating were far more accurately controlled in the present trials. The coating temperature in the second trial was 230°C ± 5°C, roughly 100°C above the coating temperature for the previous trials. This difference has a dramatic effect upon the membrane surface structure.

Several different samples were taken with GTA and Citroflex 2 coating at two different production rates (30 and 60m/min). Samples with GTA as a solvent were only taken with a GTA coating and likewise for Citroflex 2. The results are shown in table 12 and in the figures, which show representative examples of the membranes.

Figure 2 is a SEM which shows a Halar membrane prepared at a production rate of 60m/min and coated with Citroflex at a rate of 7.5 cc/min.

Figure 3 is a SEM which shows a Halar membrane prepared at a production rate of 80m/min and coated with GTA at a rate of 2.5 cc/min.

**TABLE 12 PRODUCTION PROPERTIES OF COATED MEMBRANES**

| **Parameter** | **Citroflex 2** | | | | | **GTA** | | | | |
|---|---|---|---|---|---|---|---|---|---|---|
| % Polymer | 21 | | | | | 21 | | | | |
| Coating Flow (cc/min) | 5 | 7.5 | 10 | 5 | 7.5 | 1 | 2 | 5 | 2.5 | 2.5 |
| Lumen Flow (cc/min) | 5 | 5 | 5 | 5 | 5 | 5 | 5 | 5 | 5 | 5 |
| Hauloff (m/min) | 60 | 60 | 60 | 80 | 80 | 60 | 60 | 60 | 80 | 100 |
| Permeabilit y(LM⁻²H⁻¹ @100kPa) | 2633 | 3515 | 3161 | 2366 | 3090 | 38 | 19 | 64 | - | 57 |
| Bubble Point (kPa) | 250 | 350 | 400 | 350 | 350 | >660 | >660 | >660 | >660 | >660 |
| Break Extension (%) | 66 | 53 | 29 | 42 | 57 | 185 | 184 | 168 | 131 | 132 |
| Break Force (N) | 0.96 | 0.84 | 0.71 | 0.74 | 0.69 | 1.36 | 1.26 | 1.45 | 1.14 | 1.26 |
| Force/unit area (MPa) | 6.78 | 3.63 | 4.35 | 2.49 | 2.07 | 4.87 | 7.50 | 5.20 | 6.82 | 7.56 |
| Fibre | 652 | 621/ | 570/ | 660/ | 561 | 710/ | 760/ | 697/ | 539/ | 535/ |
| OD/ID (µm) | /37 8 | 336 | 380 | 376 | /32 6 | 356 | 393 | 393 | 278 | 271 |

Unlike the results obtained in the initial trial, the surfaces here due to GTA and Citroflex are no longer similar and the Citroflex coating gives a *less* open surface, contrary to previous trials. This is most likely due to the increase in coating temperature, since at higher temperatures both the Citroflex 2 and GTA become more aggressive as a solvent. The Citroflex is most likely starting to re-dissolve some of the surface of the fibre before final precipitation is forced thus solidifying the structure.

The internal membrane structure also appears to be affected - the pores internally with Citroflex 2 as a solvent appear far coarser than those in the structure with a GTA solvent, whose pores appear very small and tightly packed. This is reflected in the permeability and bubble point - the fibres with Citroflex 2 as the solvent have a water bubble point much lower (250-400kPa) but a much higher permeability (2500-3500LMH) than the GTA coated samples. Given a regular surface on the Citroflex fibres the bubble point could be increased and the permeability enhanced.

The GTA samples are permeable however, at all coating flow rates. The GTA samples all had water bubble points far higher than the porometer could measure - but estimated to be in the region 800-900kPa. These samples appear more clearly asymmetric than the samples with the Citroflex 2 as the solvent/coating.

The samples were tested for their capability for ultrafiltration. Initial tests showed a HFE bubble point of between 200 and 300kPa. This correlates to a membrane with pores approaching - if not already within - the UF range. Consequently one sample was tested for protein retention with Immuno Gamma Globulin (IGG, MW = 120kD). The sample tested was the first of the GTA coated samples with 1 cc/min of coating. The sample retained >95% of IGG, close to a known UF membrane possessing a retention of 98%.

These fibre samples were not treated with glycerol, as is standard practice for UF-style membranes. Glycerol prevents very small pores from collapsing upon drying the membrane. Some similar samples to those UF tested were soaked in Glycerol before drying to prevent any possible pore collapse. This enhanced the permeability of the membrane up to 138 LMH from 0, and explains the poor permeabilities in the UF tests.

**TABLE 13 UF RESULTS**

| **GTA solvent/Coating 1 cc/mm Coating** | | |
|---|---|---|
| **Sample** | **Time** | **LMH** |
| Ethanol | *02:49:04* | 6.17 |
| clean water | *3:11:19.0* | 15.90 |
| 1 | *1:20:00.0* | 10.34 |
| 2 | *2:51:05.0* | 11.74 |
| 3 | *3:51:05.0* | 12.36 |

Both Citroflex 2 and GTA samples at 80m/min and the 100 m/min samples (GTA) production rate show very little difference from the corresponding 60 m/min samples in flow surface structure, and no difference is apparent in either %BE, BF or permeability.

Using GTA as a coating for the Halar fibres provides a remarkable amount of control over both the structure and porosity of the fibre surface. A lower coating flow rate still seems to keep the fibre permeable and enhances the asymmetry, whereas a higher coating flow rate gives a far more open surface. It is interesting is that the Permeability of the 1 cc/min samples is not vastly different from the 5 cc/min samples, yet the fibre surface *appears* far less porous. This suggests that the internal pore size is very small. Thus if the surface porosity is controlled accurately then either the polymer concentration can be decreased or Citroflex 2 used as a solvent to increase the permeability, all while maintaining excellent bubble point/retention characteristic of the fibre.

### VIRUS RETENTION RESULTS

A sample of Halar hollow fibre membranes was prepared in accordance with the methods disclosed herein. The sample was prepared from a dope containing Halar 901LC at a concentration of 21%, with a coating flow of 0.3ml/min. The coating, the solvent and the lumen were all GTA. The quench was in water at 15°C.

### Dextran Retention:

Three to four fibres approximately 10cm long were made into a loop and the cut ends sealed in epoxy glue. 148kd Molecular weight Dextran was filtered through this potted fibre. The feed & filtrate concentration was measured using HPLC and the percentage dextran retained by the fibre was calculated. Approximately 25% of the dextran was retained.

### Vims Retention:

In a similar fashion, three to four fibres approximately 10cm long were made into a loop and the cut ends sealed in epoxy glue. A solution of MS2 type virus, at a feed concentration of approximately 30000 units per ml was filtered through this potted fibre. The log retention of virus was calculated and determined to be 4.30. Typically, a membrane having a viral log reduction of value of greater than 4 is considered to be an ultrafiltration membrane.

### Permeability test:

The permeability of the fibres from the same batch as used for the dextran and virus retention tests was also determined. Three to four looped and potted 10 cm fibres were tested for permeability on a "porometer". The porometer allows water to be filtered at 100kPa pressure from the outside of the fibres to the inside and out through the fibre ends. The time required to pass 10ml of water is recorded and used to calculate the Permeability in litres/meter².hour, which in the present case was determined to be 300 litres/meter².hour.

The dextran, virus and permeability test were reproduced on a second batch of Halar hollow fiber membranes prepared under identical conditions and identical results were obtained, suggesting that there were no reproducibility problems in the use of Halar to make ultrafiltration and microfiltration membranes.

Halar on its own forms a particularly good membrane with an excellent bubble point and clean water permeability combined. The addition of coatings and silica adds another dimension to the membrane properties.

While the invention has been described with reference to particular embodiments, it will be understood by those skilled in the art that the inventive concept disclosed herein is not limited only to those specific embodiments disclosed.

**Table 13 - Halar Trials Summary - Summary of membrane production**

| Sample | %polymer | Solvent | Dope Flow (cc/min) | Lumen | Lumen Flow (cc/min) | Stem length | Coating | Coating Flow (cc/min) | Hauloff (m/min) | Quench Fluid | OD (um) | ID (um) | WT (um) | WT:OD Ratio | Permeability (LMH) | %BE | BF(N) | BP(kPa) | Stress (Mpa) |
|---|---|---|---|---|---|---|---|---|---|---|---|---|---|---|---|---|---|---|---|
| 1 | 21 | GTA | 22 | Digol | 5 | none | none | nom | 35 | Water | 856 | 469 | 193.5 | 0.23 | - | - | | | |
| 2 | 21 | GTA | 22 | Digol | 5 | Short | GTA | 10 | 35 | Water | 766 | 461 | 152.5 | 0.20 | 2294 | 92.9 | 1.35 | 486 | 4.6 |
| 3 | 21 | GTA | 22 | Digol | 5 | Short | GTA | 10 | 60 | Water | 775 | 481 | 147 | 0.19 | 2193 | 95.1 | 1.27 | 492 | 4.38 |
| 4 | 21 | GTA | 35 | Digol | 5 | Long | Citroflex 2 | 10 | 35 | Water | 914 | 445 | 234.5 | 0.26 | | | | | |
| 5 | 21 | GTA | 22 | Digol | 5 | Long | Citroflex 2 | 10 | 35 | Water | 802 | 486 | 158 | 0.20 | | | | | |

## Claims

1. A method of making an asymmetric hollow fibre porous polymeric ultrafiltration or microfiltration membrane comprising the steps of:
(a) heating a mixture comprising Halar and a solvent system initially comprising a first component that is a latent solvent for Halar, said first component including citric acid ethyl ester or glycerol triacetate
and optionally a second component that is a non-solvent for Halar wherein, at elevated temperature, Halar dissolves in the solvent system to provide an optically clear solution,
(b) forming the mixture is into a hollow fibre shape;
(c) contacting an external surface of said mixture with a coating fluid;
(d) contacting an internal lumen surface of said mixture with a lumen forming fluid;
(e) rapidly cooling said mixture so that non-equilibrium liquid-liquid phase separation takes place to form a continuous polymer rich phase and a continuous polymer lean phase with the two phases being intermingled in the form of bicontinuous matrix of large interfacial area,
(f) continuing cooling until the polymer rich phase solidifies; and
(g) removing the polymer lean phase from the solid polymeric material,
such that the resultant membrane is in the form of a hollow fibre:
wherein steps (b), (c) and (d) are carried out by coextrusion.

2. A method according to Claim 1 wherein said coating fluid is selected from one or more of glycerol triacetate, citric acid ethyl ester and digol.

3. A method according to any one of the preceding claims wherein Halar is present in the blend in an amount ranging from 14-25%.

4. A method according to any one of the preceding claims wherein Halar is present in the blend in an amount ranging from 16-23%.

5. A method according to any one of the preceding claims wherein the lumen forming fluid isdigol.

6. A method according to any one of the preceding claims wherein the mixture is heated in step a), to a temperature above 200°C, preferably above 220°C.

7. A method according to any one the preceding claims wherein said mixture of Halar further incorporates a leachable pore forming agent; wherein said leachable pore forming agent is removed from said membrane with a leachant following casting of said membrane.

8. A method according to claim 7 wherein the leachable pore forming agent is an inorganic solid with an average particle size less than 1 micron

9. A method according to claim 8 or claim 9 wherein the leachable agent is present in an amount of from 10 to 50wt% of the final polymer.

10. A method according to any one of claims 7 to 9 wherein the leachable agent is present in an amount of 30wt% of the final polymer.

11. A method according to any one of claims 7 to 10 wherein the leachable agent is present in around 3-9%.

12. A method according to any one of claims 7 to 11 wherein the leachable pore forming agent is silica.

13. A method according to claim 12 wherein the silica is hydrophilic silica.

14. A method according to any one of claims 7 to 13 wherein the leachant is a caustic solution.

15. A method according to any one of the preceding claims wherein digol is used as a non-solvent and independently water is used as a quench fluid.

## Patentansprüche

1. Verfahren zur Herstellung einer porösen, asymmetrischen Hohlfaser-Polymermembran zur Ultrafiltration oder Mikrofiltration, das die folgenden Schritte umfasst:
(a) Erhitzen einer Mischung, die Halar und ein Lösungsmittelsystem umfasst, das anfangs Folgendes umfasst: eine erste Kompnente, die ein latentes Lösungsmittel für Halar ist, wobei genannte erste Komponente Citronensäureethylester oder Glyceroltriacetat einschließt, und optional eine zweite Komponente, die ein Nichtlösungsmittel für Halar ist, worin sich Halar bei erhöhter Temperatur in dem Lösungsmittelsystem auflöst, um eine optisch klare Lösung bereitzustellen;
(b) Formen der Mischung zu einer Hohlfaserform;
(c) Inkontaktbringen einer äußeren Oberfläche von genannter Mischung mit einer Beschichtungsflüssigkeit;
(d) Inkontaktbringen einer inneren Lumenoberfläche von genannter Mischung mit einer Lumen-bildenden Flüssigkeit;
(e) schnelles Abkühlen von genannter Mischung, sodass eine Nichtgleichgewichts-Flissig-Flüssig-Phasentrennung stattfindet, um eine kontinuierliche polymerreiche Phase und eine kontinuierliche polymerarme Phase zu bilden, wobei die zwei Phasen in Form von bikontinuierlicher Matrix von großer Grenzfläche vermischt sind;
(f) Fortsetzen des Kühlens, bis sich die polymerreiche Phase verfestigt; und
(g) Entfernen der polymerarmen Phase aus dem festen Polymermaterial, sodass die resultierende Membran in Form einer Hohlfaser vorliegt;
worin die Schritte (b), (c) und (d) durch Coextrusion durchgeführt werden.

2. Verfahren nach Anspruch 1, worin genannte Beschichtungstlüssigkeit aus einem oder mehreren von Glyceroltriacetat, Citronensäureethylester und Digol ausgewählt ist.

3. Verfahren nach einem der vorstehenden Ansprüche, worin Halar im Gemisch in einer Menge im Bereich von 14-25 % vorliegt.

4. Verfahren nach einem der vorstehenden Ansprüche, worin Halar im Gemisch in einer Menge im Bereich von 16-23 % vorliegt.

5. Verfahren nach einem der vorstehenden Ansprüche, worin die Lumen-bildende Flüssigkeit Digol ist.

6. Verfahren nach einem der vorstehenden Ansprüche, worin die Mischung im Schritt a) auf eine Temperatur über 200 °C, bevorzugt über 220 °C erhitzt wird.

7. Verfahren nach einem der vorstehenden Ansprüche, worin genannte Mischung von Halar weiter einen auslaugbaren Porenbildner enthält, worin genannter auslaugbarer Porenbildner aus genannter Membran mit einem Auslaugmittel nach dem Gießen von genannter Membran entfernt wird.

8. Verfahren nach Anspruch 7, worin der auslaugbare Porenbildner ein anorganischer Feststoff mit einer durchschnittlichen Partikelgröße von weniger als 1 Mikron ist.

9. Verfahren nach Anspruch 8 oder Anspruch 9 [sic], worin das auslaugbare Mittel in einer Menge von 10 bis 50 Gew.-% des Endpolymers vorliegt.

10. Verfahren nach einem der Ansprüche 7 bis 9, worin das auslaugbare Mittel in einer Menge von 30 Gew.-% des Endpolymers vorliegt.

11. Verfahren nach einem der Ansprüche 7 bis 10, worin das auslaugbare Mittel in etwa 3-9 % vorliegt.

12. Verfahren nach einem der Ansprüche 7 bis 11, worin der auslaugbare Porenbildner Kieselsäure ist.

13. Verfahren nach Anspruch 12, worin die Kieselsäure hydrophile Kieselsäure ist.

14. Verfahren nach einem der Ansprüche 7 bis 13, worin das Auslaugmittel eine Laugenlösung ist.

15. Verfahren nach einem der vorstehenden Ansprüche, worin Digol als Nichtlösungsmittel verwendet wird und unabhängig Wasser als Quenchflüssigkeit verwendet wird.

## Revendications

1. Méthode de fabrication d'une membrane de microfiltration ou d'ultrafiltration polymère, poreuse, en fibres creuses et asymétrique, comprenant les étapes consistant à :
(a) chauffer un mélange contenant du Halar et un système de solvants comprenant initialement un premier composant qui est un solvant latent pour le Halar, ledit premier composant comportant un ester éthylique de l'acide citrique ou du triacétate de glycérol,
et éventuellement un deuxième composant qui est un non solvant pour le Halar où, à des températures élevées, le Halar se solubilise dans le système de solvants afin de fournier une solution optiquement limpide,
(b) mettre en forme le mélange en forme de fibres creuses ;
(c) mettre en contact une surface externe dudit mélange avec un fluide de revêtement ;
(d) mettre en contact une surface de lumière interne dudit mélange avec un fluide formateur de lumière ;
(e) refroidir rapidement ledit mélange de sorte qu'une séparation de phases liquide-liquide non à l'équilibre ait lieu afin de former une phase riche en polymère continue et une phase pauvre en polymère continue, les deux phases étant entremêlées sous la forme d'une matrice bicontinue de surface interfaciale importante ;
(f) poursuivre le refroidissement jusqu'à solidification de la phase riche en polymère ; et
(g) retirer la phase pauvre en polymère à partir du matériau polymère solide,
de sorte que la membrane résultante soit sous forme de fibres creuses ;
où les étapes (b), (c) et (d) sont réalisées par co-extrusion.

2. Méthode selon la revendication 1, dans laquelle ledit fluide de revêtement est choisi parmi un ou plusieurs parmi le triacétate de glycérol, l'ester éthylique de l'acide citrique et le diéthylène glycol.

3. Méthode selon l'une quelconque des revendications précédentes, dans laquelle le Halar est présent dans le mélange en une quantité de 14-25%.

4. Méthode selon l'une quelconque des revendications précédentes, dans laquelle le Halar est présent dans le mélange en une quantité de 16-23%.

5. Méthode selon l'une quelconque des revendications précédentes, dans laquelle le fluide de formation de lumière est le diéthylène glycol.

6. Méthode selon l'une quelconque des revendications précédentes, dans laquelle le mélange est chauffé dans l'étape (a) jusqu'à une température supérieure à 200°C, préférablement supérieure à 220°C.

7. Méthode selon l'une quelconque des revendications précédentes, dans laquelle ledit mélange de Halar incorpore en outre un agent formateur de pores lixiviable, où ledit agent formateur de pores lixiviable est éliminé de ladite membrane par un lixiviateur après coulée de ladite membrane.

8. Méthode selon la revendication 7, dans laquelle l'agent formateur de pores lixiviable est un solide inorganique ayant une taille moyenne de particules inférieure à 1 micron.

9. Méthode selon la revendication 8 ou la revendication 9 *[sic],* dans laquelle l'agent lixiviable est présent en une quantité allant de 10 à 50% en poids du polymère final.

10. Méthode selon l'une quelconque des revendications 7 à 9, dans laquelle l'agent lixiviable est présent en une quantité de 30% en poids du polymère final.

11. Méthode selon l'une quelconque des revendications 7 à 10, dans laquelle l'agent lixiviable est présent à environ 3-9%.

12. Méthode selon l'une quelconque des revendications 7 à 11, dans laquelle l'agent formateur de pores lixiviable est de la silice.

13. Méthode selon la revendication 12, dans laquelle la silice est de la silice hydrophile.

14. Méthode selon l'une quelconque des revendications 7 à 13, dans laquelle le lixiviateur est une solution caustique.

15. Méthode selon l'une quelconque des revendications précédentes, dans laquelle le diéthylène glycol est utilisé comme non solvant et indépendamment, de l'eau est utilisée comme fluide de trempage.
